# EUROPEAN PATENT APPLICATION

(11) **EP 4 819 575 A1**
(43) Date of publication of application: **07.10.2026**
(21) Application number: 24897921.3
(22) Date of filing: 31.10.2024
(51) Int. Cl.: H04L 49/25, G06N 3/063, H04L 41/122, H04L 49/111, H04L 49/90, H04L 49/00

(54) **PACKET NETWORK CAPABLE OF INTER-TRANSPOSE**

(30) Priority: 29.11.2023 KR 20230169300
(71) Applicant: Furiosaai Inc., Seoul 06036 (KR)
(72) Inventor: KIM, Han Joon, Hwaseong-si Gyeonggi-do 18437 (KR); CHOI, Young Geun, Seoul 03473 (KR); PARK, Jun Young, Goyang-si Gyeonggi-do 10394 (KR); BAE, Byeong Wook, Seongnam-si Gyeonggi-do 13490 (KR); JEONG, Hyun Min, Seoul 07931 (KR)
(74) Representative: Murgitroyd & Company
(86) International application number: PCT/KR2024/016950
(87) International publication number: WO 2025/116324

(57) **Abstract**

The present specification discloses a packet network capable of inter-transpose. In the operation processing apparatus according to the present specification, when one of the two axes constituting the data is stored inside a data memory slice and the other is stored across memory slices, the data can be transposed by assigning dynamic destination node IDs to the data. In the present specification, since the data transpose is performed internally by the patch unit, this may be referred to as an "inter-transpose."

## Description

### [Technical Field]

The present technology relates to a neural network processor, and more particularly, to a network for transmitting packets.

### [Background Art]

The present application claims priority based on Korean Patent Application No. 10-2023-0169300 filed in the Republic of Korea on November 29, 2023, and all contents disclosed in the specification and drawings of the corresponding application are incorporated herein by reference in the present application.

An artificial neural network (ANN) is artificial intelligence implemented by connecting artificial neurons mathematically modeled after neurons constituting the human brain. One mathematical model of artificial neurons is Equation (1) below. Specifically, an artificial neuron receives input signals xᵢ, separately multiplies xᵢ by corresponding weights wᵢ, and adds the results. Subsequently, the artificial neuron calculates an activation value using an activation function and transmits the activation value to the next artificial neuron. An ANN is artificial intelligence implemented by connecting artificial neurons mathematically modeled after neurons constituting the human brain. One mathematical model of artificial neurons is Equation (1) below. Specifically, an artificial neuron receives input signals xᵢ, separately multiplies xᵢ by corresponding weights wᵢ, and adds the results. Subsequently, the artificial neuron calculates an activation value using an activation function and transmits the activation value to the next artificial neuron. $y = f \left({w}_{1}∗{x}_{1}+{w}_{2}∗{x}_{2}+…{w}_{n}∗{x}_{n}\right) = f \left(\sum {w}_{i} ∗ {x}_{i}\right) , where i = 1 , … , n , n = # input signal$ Equation (1)

A deep neural network (DNN) which is a form of ANN has a layered network architecture in which artificial neurons (nodes) are stratified. A DNN includes an input layer, an output layer, and multiple hidden layers between the input layer and the output layer. The input layer includes multiple nodes to which input values are input, and the nodes of the input layer transmit output values calculated through the above-described mathematical model to nodes of the subsequent hidden layer connected to the input layer. Nodes of the hidden layer receive the input values, calculate output values, and transmit the output values to nodes of the output layer through the above-described mathematical model.

Calculation processes of deep learning which is a form of machine learning performed in a DNN may be classified as a training process in which the given DNN improves the calculation capability thereof by continuously learning training data and a process of making an inference from new input data using the DNN trained through the training process.

The inference process of deep learning is performed through forward propagation in which nodes of an input layer receive input data and then hidden layers and an output layer sequentially perform calculation in order of layers. Finally, nodes of the output layer draw a conclusion of the inference process on the basis of output values of the hidden layers.

On the other hand, in the training process of deep learning, training is performed by adjusting the weights of nodes to reduce the difference between the conclusion of the inference process and a correct answer. In general, the weights are adjusted by gradient descent. To implement gradient descent, it is necessary to calculate a differential value of the difference between the conclusion of the inference process and the correct answer with respect to the weight of each node. In this process, the differential value of the weight of a preceding node in the DNN is calculated with the chain rule of the differential value of the weight of the subsequent node in the DNN. Since the chain rule calculation is performed in the reverse direction of the inference process, a deep learning process employs backpropagation.

In other words, the DNN has a layered structure, and nodes in each layer receive result values from multiple nodes in the previous layer, output new result values by performing calculation on the basis of the above-described mathematical model of the nodes, and transfer the new result values to nodes of the next layer.

Meanwhile, the calculation structure of the DNN may be a distributed processing structure for distributing numerous calculations which are performed by nodes in each layer to multiple operation units to process the calculations. Calculations performed by nodes in each layer are distributed to multiple operation units and processed, and each operation unit reads data required for a calculation from a memory, performs the calculation, and stores the calculation result back in the memory.

### [Disclosure]

### [Technical Problem]

The present specification is directed to providing a packet network capable of inter-transpose.

The present specification is not limited to the objective described above, and other objectives which have not been described will be clearly understood by those of ordinary skill in the art from the following description.

### [Technical Solution]

One aspect of the present invention provides an operation processing apparatus including a plurality of fetch units for reading data required for operations to perform processing of a neural network from memory and providing the data to an operation unit. Each fetch unit may comprise a network interface having a fetch buffer in which data stored in the memory is fetched, a fetch network having a data processing mapping table describing how to process the input data according to the node ID of the data fetched in the network interface and a plurality of routers that guarantee sequential delivery and a fetch network controller configured to reconfigure the data processing mapping table of each of the plurality of routers to form a software topology according to an operation form. The memory may comprise a number of data memory slices equal to the plurality of routers. And the network interface may comprise an interface controller configured to assign a destination node ID to the data fetched in each data memory slice.

The network interface may be configured to assign, to the data fetched in each data memory slice, a number of destination node IDs corresponding to the number of routers belonging to the same group by the fetch network controller.

The network interface may be configured to sequentially and repeatedly assign destination node IDs to the data fetched in each data memory slice according to the order in which the data was fetched.

Each of the routers may include a main input port to which data is input from the memory, a first transmission output port configured to transmit the data to an adjacent first router, a first transmission input port to which data received from the adjacent first router is input, a second transmission output port configured to transmit the data to an adjacent second router, a second transmission input port to which data received from the adjacent second router is input, and a main output port configured to provide the data to the operation unit.

The data processing mapping tables may store information about whether or not to block, reflect, and output the input data.

The fetch network controller may set whether or not to block, reflect, and output the input data in accordance with a topology to be reconfigured.

The fetch network controller may equally set blocking and outputting in the data processing mapping tables of the routers belonging to the same group in the reconfigured topology and sets only one node ID to be output.

Each router comprises an arbiter configured to control an input port according to tail information of the input data and change the tail information according to keep-tail information of the input data.

The tail information may be one of a first logical value (T) indicating an end of a packet and a second logical value (F) indicating that it is not the end of the packet, and the keep-tail information may be one of a first logical value (T) indicating maintaining the tail information and a second logical value (F) indicating changing the tail information.

When controlling the input port such that data is input from the memory, the arbiter may change the input port such that data is input from an adjacent router when tail information of the data input from the memory is a first logical value (T).

The arbiter may change tail information of the input data to a second logical value (F) when keep-tail information of the data input from the memory is a second logical value (F).

The arbiter may controls such that data is input from the memory when tail information of the data input from the adjacent router is a first logical value (T).

The interface controller may further set the tail information and the keep-tail information in the fetched data.

The interface controller may set tail information of last data of the packet among the fetched data to a first logical value (T), and sets tail information of remaining data to a second logical value (F).

The interface controller may set keep-tail information of data having a last node ID among a software topology configuration of the router to a first logical value (T) indicating maintaining the tail information, and sets keep-tail information of data having remaining node IDs to a second logical value (F) indicating changing the tail information.

Other details of the present invention are included in the detailed description and drawings.

### [Advantageous Effects]

According to the present specification, data can be transposed during the data patching process without additional processing such as a separate computation procedure or data restorage for transposing the data.

According to another aspect of the present specification, an operation processing apparatus having a high throughput at low cost may be provided. Also, it is possible to achieve an improved calculation processing capability compared to conventional neural network processors.

Effects of the present invention are not limited to those described above, and other effects which have not been described should be clearly understood by those of ordinary skill in the art from the following description.

### [Description of Drawings]

FIG. 1 is a block diagram schematically showing a configuration of an operation processing apparatus according to an embodiment of the present invention;
FIG. 2 is a detailed block diagram showing elements of the operation processing apparatus according to the present specification;
FIG. 3 is a block diagram showing a detailed configuration of a fetch unit according to an embodiment of the present specification;
FIG. 4 is a reference diagram illustrating a configuration of a router according to the present specification;
FIG. 5 shows a software topology according to a first embodiment;
FIG. 6 is a reference diagram of a data processing mapping table according to the first embodiment;
FIG. 7 shows a software topology according to a second embodiment;
FIG. 8 is a reference diagram of a data processing mapping table according to the second embodiment;
FIG. 9 shows a software topology according to a third embodiment;
FIG. 10 is a reference diagram of a data processing mapping table according to the third embodiment;
FIG. 11 shows a software topology according to a fourth embodiment;
FIG. 12 is a reference diagram of a data processing mapping table according to the fourth embodiment; and
FIG. 13 is an example diagram of data input timings according to an embodiment of the present specification.
FIGs. 14 to 20 are reference diagrams illustrating that the arbiter unit processes data.
FIG. 21 is a reference diagram of an inter-transpose according to an embodiment of the present specification.
FIG. 22 is an example of a data processing mapping table for the inter-transpose according to an embodiment of the present specification.
FIG. 23 is a reference diagram of the result of the inter-transpose according to an embodiment of the present specification.

### [Modes of the Invention]

The advantages and features of the invention disclosed in the present specification and methods of achieving them will become clear through embodiments described in detail with reference to the accompanying drawings. However, the present specification is not limited to the embodiments set forth herein and can be implemented in various different forms. The embodiments are provided to make the disclosure of the present specification complete and fully convey the scope of the present specification to those skilled in the technical field to which the present specification pertains (hereinafter "those skilled in the art"). The scope of the present specification is only defined by the claims.

Terminology used in the specification is only for the purpose of describing the embodiments and is not intended to limit the scope of the present specification. In this specification, the singular also includes the plural unless particularly described in the context. As used herein, the terms "comprises" and/or "comprising" do not exclude the presence or addition of one or more components other than stated components.

Throughout the specification, like reference numbers refer to like components, and "and/or" includes any one or all possible combinations of stated components. Although "first," "second," etc. are used to describe various components, the components are not limited by the terms. These terms are used to distinguish one component from other components. Accordingly, it is apparent that a first component described below may be a second component without departing from the technical spirit of the present invention.

Unless otherwise defined, all terms (including technical and scientific terms) used in the present specification may have meanings generally understood by those of ordinary skill in the art. Also, unless clearly defined, all terms defined in generally used dictionaries are not to be ideally or excessively interpreted. Hereinafter, the embodiments of the present invention will be described with reference to the accompanying drawings.

Data used in a deep learning process may be in the form of a tensor having a size ranging from hundreds of kilobytes (Kbytes) to hundreds of megabytes (Mbytes). Such data may be stored in multiple memory banks constituting an on-chip memory.

The multiple memory banks and multiple operation units are connected to a network for data transmission. In the case of a network-on-chip, a network may be constructed in the chip and may include routers. The routers include a router for transmitting data packets received from multiple nodes to multiple nodes. The routers may perform at least one of the following operations of: i) forwarding data packets, that is, traffic, input from various directions toward a destination, ii) performing arbitration when contention occurs, and iii) performing flow control to prevent packet loss. The performance and cost of such a router are determined by a topology, a bandwidth, flow control, a buffer, etc., and naturally, a router having a high processing rate with low cost, area, and energy is necessary.

Meanwhile, in deep learning, most traffic patterns are reused several times to generate multiple pieces of output tensor data from the same tensor data. Accordingly, to reduce the number of memory accesses, a router may read input tensor data from a memory and broadcast or multicast the input tensor data to multiple operation units. According to a general multicasting method, each piece of data (e.g., a data packet) is transmitted using a destination recorded therein. This method has a problem that, when the number of nodes increases, the size of a packet header increases in proportion to the number of nodes (e.g., when a bitmap representing a destination is included in a packet header, 64 bits or more are required for 64 nodes). In general, buffered flow control involves head-of-line blocking in accordance with a buffer area. As a method of solving this problem, source throttling may be used. According to this method, when congestion occurs, it is then detected and avoided. Therefore, a network having a high processing rate at a low cost in consideration of a routing pattern characteristic of deep learning is necessary.

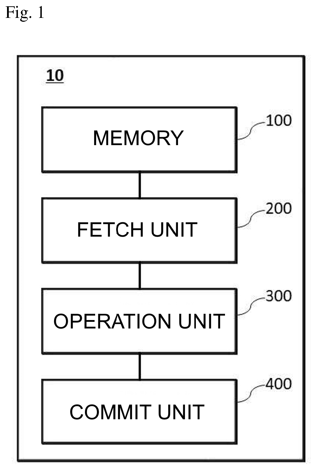

FIG. 1 is a block diagram schematically showing a configuration of an operation processing apparatus according to an embodiment of the present invention.

As shown in FIG. 1, an operation processing apparatus 10 may include a memory 100, a fetch unit 200, an operation unit 300, and a commit unit 400. However, the operation processing apparatus 10 does not necessarily include all of the memory 100, the fetch unit 200, the operation unit 300, and the commit unit 400 as shown in FIG. 1. For example, the memory 100 and the commit unit 400 may be disposed outside the operation processing apparatus 10.

The memory 100 may store at least one type of data described herein. For example, the memory 100 may store input data, a tensor, output data, a filter, calculation result data of the operation unit, all data used in the fetch unit, etc. The memory 100 may be, but is not necessarily, formed as a data memory such as a static random access memory (SRAM) or a dynamic random access memory (DRAM).

The fetch unit 200 may read data required for a calculation from the input data stored in the memory 100 and provide the data to the operation unit 300. When the input data is a tensor, the fetch unit 200 may read the tensor stored in the memory 100 and feed the tensor to the operation unit 300 in accordance with a type of calculation. The type of calculation may be, for example, matrix multiplication, convolution, grouped convolution, etc. In this case, the fetch unit 200 may sequentially read a data group which has the same or a larger amount of data than a unit data throughput of one or more calculators provided in the operation unit 300, from the memory 100 and feed the data group to the operation unit 300.

The operation unit 300 may generate output data by processing a calculation of the input data received from the fetch unit 200. The operation unit 300 may be configured in accordance with (to correspond to) a type of calculation to be performed. As an example, the operation unit 300 may process the data fed from the fetch unit 200 in a streaming manner, but a method of processing the data is not limited thereto. The operation unit 300 may include the one or more calculators.

The commit unit 400 may store calculation result data output (e.g., in a streaming manner) from the operation unit 300 in the memory 100. In the case of performing an operation of storing the calculation result data received from the operation unit 300 in the memory 100, the commit unit 400 may store the calculation result data in the memory 100 on the basis of the type of calculation to be performed next. For example, the commit unit 400 may change the calculation result data into a preset form or a suitable form for subsequent calculation and store the transformed calculation result data in the memory 100.

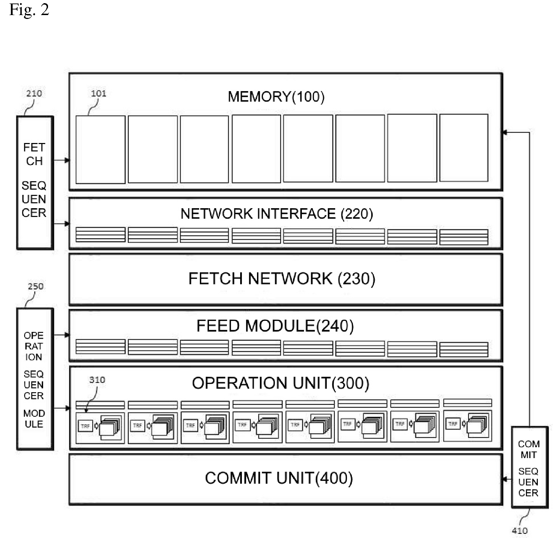

FIG. 2 is a detailed block diagram showing elements of the operation processing apparatus according to the present specification.

The above-described memory 100, fetch unit 200, operation unit 300, and commit unit 400 will be described in further detail below with reference to FIG. 2.

The memory 100 may be configured on the basis of memory address spaces. As an example, the memory address spaces may be consecutive or sequential. Also, the memory address spaces may be one dimensional (1D). However, the memory address spaces are not limited thereto and may have a two-or-more-dimensional arrangement. The internal structure of the memory 100 may be configured as a slice structure that is separately accessible. For example, the memory 100 may include a plurality of data memory slices 101. Here, the number of data memory slices 101 may be determined in accordance with the number of dot-product engines 310 included in the operation unit 300. As an example, the number of slices 101 may be equal to the number of dot-product engines 310 included in the operation unit 300. As an example, when the input data is a tensor, the tensor may be divided in a channel direction and a height direction and then stored in the data memory slices 101.

The fetch unit 200 may read data from the memory 100 and feed the data to the dot-product engines 310 of the operation unit 300. For example, the fetch unit 200 may include at least one of a fetch sequencer 210, a network interface 220, a fetch network 230, and an operation sequencer module 250. The fetch sequencer 210 may control a data fetch operation from the memory 100 to the network interface 220. The network interface 220 is intended to fetch data stored in the memory 100 and may provide an interface between the memory 100 and the fetch network 230. The fetch network 230 may transmit the fetched data to a feed module 240. The operation sequencer module 250 may control the operation unit 300 to perform a specific calculation by controlling the feed module 240 and the data input to the feed module 240.

The fetch network 230 of the fetch unit 200 may have one of various structures in accordance with calculation content and the shape of data. The fetch network 230 may be configured or reconfigured by software as a form of topology required by the operation unit 300. Also, the fetch network 230 may determine the topology in accordance with the shape of the input data and the type of calculation. The fetch network 230 may support various communication methods, such as direct, vertical multicast, channel multicast, vertical nearest-neighbor, etc., in accordance with a calculation performed by the operation unit 300, but communication methods supported by the fetch network 230 are not limited thereto.

For example, in the case of two-dimensional (2D) convolution, it is assumed that values of all input channels are to be input to the dot-product engines 310 separately calculating output activations. Accordingly, the fetch unit 200 may feed input activation values which are sequentially read in the channel direction to the dot-product engines 310 in a multicast manner. Also, the fetch unit 200 may use the fetch sequencer 210 to sequentially read data to be input to the operation unit 300 from the data memory slices 101. Data read from the data memory slices 101 by the fetch sequencer 210 may be transmitted to the operation unit 300 through the fetch network 230 of the fetch unit 200.

As described above, the fetch unit 200 may read tensor slices in parallel from the memory 100 and feed the tensor slices to the operation unit 300 in a form that is calculable by the operation unit 300. The fetch network 230 may further include a fetch network controller (not shown in FIG. 2) that configures and manages the fetch network 230 to the data read from the memory 100 to the operation unit 300 which requires the data.

The operation unit 300 may include the plurality of dot-product engines 310 which can perform parallel processing. As an example, the operation unit 300 may include 256 dot-product engines 310, but the number of dot-product engines 310 included in the operation unit 300 is not limited thereto. Each of the dot-product engines 310 may include one or more calculators (e.g., 32 multiply-and-accumulate (MAC) units). Each of the dot-product engines 310 may perform various calculations in accordance with the configuration of the calculators. The dot-product engines 310 of the operation unit 300 may also be divided in the channel direction and the height direction and perform calculation to generate output activations.

The operation unit 300 may include a register file (not shown) in addition to the dot-product engines 310.

The register file is a storage space for temporarily storing one of operands which are relatively frequently used or reused when the dot-product engines 310 perform calculation. For example, the register file may be an SRAM or a DRAM but is not limited thereto.

For example, when a calculation is performed in a neural network, in the case of a general convolution layer having a large activation size, weights may be stored in a register file, and activations may be stored in a memory. Also, in the case of a fully connected layer having a weight size larger than an activation size, weights may be stored in a memory, and activations may be stored in a register file.

As an example, when the operation unit 300 performs an MAC operation, the dot-product engines 310 may use the input data received from the fetch unit 200, register values received from register files present in the dot-product engines 310, and an accumulation value received from an accumulator as operands for performing the MAC operation. The calculation result may be stored back in the accumulator or transmitted to the commit unit 400 to be stored in the memory 100 as output data.

Meanwhile, as described above, the commit unit 400 may change an output activation calculated by the operation unit 300 into a form required for the next calculation and store the transformed output activation in the memory 100.

For example, in a neural network, the commit unit 400 may store an output activation calculated by a specific layer in the memory so that the activation may be used for calculation in the next layer. Also, the commit unit 400 may perform transpose (e.g., tensor manipulation) in accordance with a data form required for calculation in the next layer and store the results by transmitting the result to the memory 100 through a commit network (not shown).

In this way, after a calculation is performed by the operation unit 300, the commit unit 400 stores output data in the memory 100 in a desired form. To store the output data in the desired form, the commit unit 400 may perform data transpose (tensor transpose) using a data transpose module (not shown) and a commit network module (not shown).

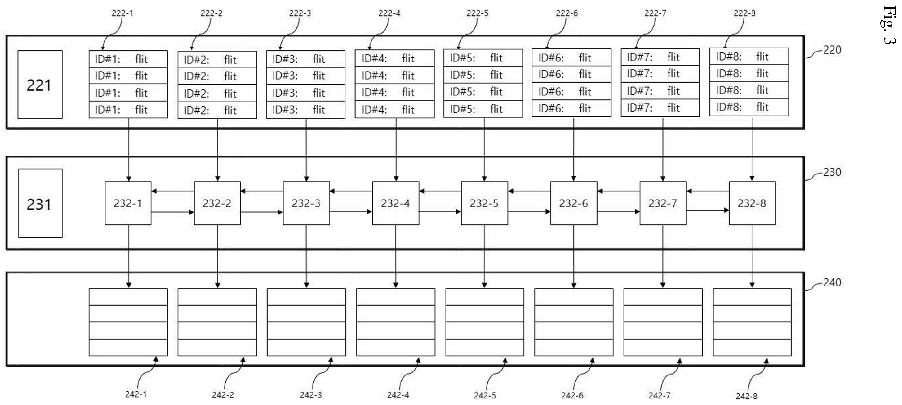

FIG. 3 is a block diagram showing a detailed configuration of a fetch unit according to an embodiment of the present specification.

Referring to FIG. 3, the network interface 220, the fetch network 230, and the feed module 240 are included in the fetch unit 200 according to an embodiment of the present specification.

Data stored in each of the data memory slices 101 may be fetched to the network interface 220. The network interface 220 may include fetch buffers 222 for storing fetched data and an interface controller 221 for giving a node identifier (ID) corresponding to each data memory slice to the fetched data.

The fetch network 230 may transmit the data fetched to the fetch buffers 222. To this end, the fetch network 230 may include a plurality of routers 232 and a fetch network controller 231.

Each of the plurality of routers 232 may have a data processing mapping table. The data processing mapping table may represent a routing/flow control method (e.g., blocking, reflecting, outputting, etc.) of input data in accordance with a node ID of the input data. The fetch network controller 231 may rebuild a data processing mapping table. The data processing mapping table may be rebuilt adaptively for a type of calculation to be performed on corresponding data. As an example, the fetch network controller 231 may rebuild each of the data processing mapping tables of the plurality of routers 232 to form a software topology in accordance with a type of calculation. The data processing mapping tables will be described in further detail below.

The feed module 240 may provide data received from the fetch network 230 to the operation unit 300. To this end, the feed module 240 may include feed buffers 242 for storing data output from the plurality of routers 232.

Meanwhile, the memory 100 may include one memory slice 101 or two or more data memory slices 101. The number of routers 232 may be related to the number of data memory slices 101. For example, the number of routers 232 may be determined on the basis of the number of data memory slices 101, or in reverse, the number of data memory slices 101 may be determined on the basis of the number of routers 232. As an example, the number of routers 232 may be the same as the number of data memory slices 101. In this case, the routers 232 and the data memory slices 101 may correspond to each other on a one-to-one basis. In the present specification, for convenience of understanding and simplicity of drawings, it is assumed that there are eight routers 232-1 to 232-8. Since data stored in the data memory slices 101 may be fetched to the fetch buffers 222 included in the network interface 220, FIG. 3 shows eight buffers 222-1 to 222-8 separated from each other. Accordingly, the fetch buffers 222 each correspond to the data memory slices 101, and data stored in each data memory slice 101 may be fetched to the corresponding fetch buffer 222. Although the example of FIG. 3 shows physically separated buffers for convenience of description, fetch buffers are not necessarily limited to physically separated buffers.

According to an embodiment of the present specification, the plurality of routers 232 may form a 1D mesh hardware topology. According to another embodiment of the present specification, the plurality of routers 232 may also form a hardware two-dimensional mesh topology (2D mesh topology). A hardware configuration of the plurality of routers 232 may be various and is not limited to a specific form. Each of the routers 232 may receive data fetched to a fetch buffer 222 and output the data to a feed buffer 242 or transmit the data to another adjacent router 232. For convenience of description, the plurality of routers will be named "first router 232-1," "second router 232-2," ..., and "eighth router 232-8" from the leftmost router among the plurality of routers.

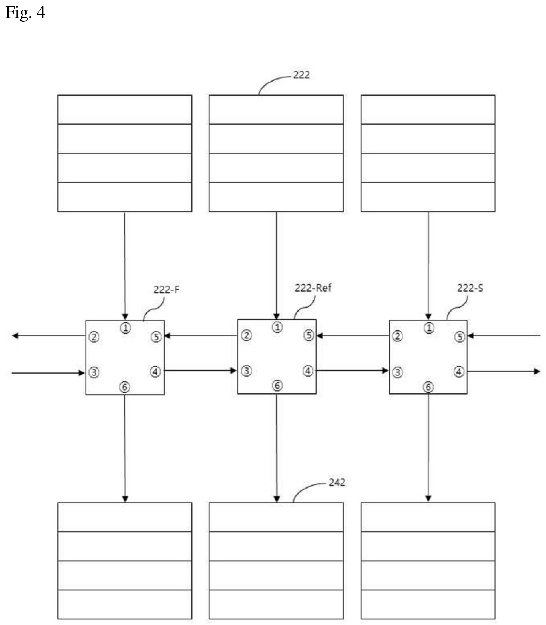

FIG. 4 is a reference diagram illustrating a configuration of a router according to the present specification.

Referring to FIG. 4, there are three routers. The configuration of a router in accordance with the present specification will be described on the basis of a router 232-Ref positioned in the middle of the three routers. The left one of the two routers adjacent to the reference router 232-Ref is named "first router 232-F," and the right one is named "second router 232-S." The terms "first" and "second" are only used for the purpose of distinguishing the two routers adjacent to the reference router 232-Ref and do not represent a priority between the routers.

The routers 232 in accordance with the present specification may include a main input port ①, a first transmission output port ②, a first transmission input port ③, a second transmission output port ④, a second transmission input port ⑤, and a main output port ⑥. The main input port ① is a port to which data is input from the memory 101, that is, a fetch buffer 222. The first transmission output port ② is a port for transmitting data to the adjacent first router 232-F. The first transmission input port ③ is a port to which data transmitted from the adjacent first router 232-F is input. The second transmission output port ④ is a port for transmitting data to the adjacent second router 232-S. The second transmission input port ⑤ is a port to which data transmitted from the adjacent second router 232-S is input. The main output port ⑥ is a port for providing data to the operation unit 300, that is, the feed buffer 242.

Accordingly, data output through the first transmission output port ② of the reference router 232-Ref is input to the second transmission input port ⑤ of the first router 232-F. Data output through the second transmission output port ④ of the first router 232-F is input to the first transmission input port ③ of the reference router 232-Ref. Data output through the second transmission output port ④ of the reference router 232-Ref is input to the first transmission input port ③ of the second router 232-S. Data output through the first transmission output port ② of the second router 232-S is input to the second transmission input port ⑤ of the reference router 232-Ref.

Referring back to FIG. 3, the first transmission output port ② and the first transmission input port ③ of the first router 232-1 are not shown. Since the first router 232-1 may be at the leftmost position physically or in a software manner, the first transmission output port ② and the first transmission input port ③ may not exist. Alternatively, the first router 232-1 may have the first transmission output port ② and the first transmission input port ③ but may not use the ports in a software manner. For the same reason, the second transmission output port ④ and the second transmission input port ⑤ of the eighth router 232-8 are not shown.

Meanwhile, in the present specification, it is assumed that the routers 232 transmit data counterclockwise. Accordingly, when each of the routers 232 transmits data input through the main input port ① and the second transmission input port ⑤, the data is assumed to be transmitted only through the first transmission output port ②. Also, when each of the routers 232 transmits data input through the transmission input port ③, the data is assumed to be transmitted only through the second transmission output port ④. When input and output ports in a data transmission process are set as described above, it is possible to prevent overlapping output of data. Also, the operation processing apparatus according to the present specification is not limited to the counterclockwise transmission. When data transmission is changed to clockwise transmission, the relationship between input and output ports may also be changed.

Each of the routers 232 according to the present specification may read a node ID of data input through the main input port ① and process data having the node ID in accordance with the data processing mapping table. According to an embodiment of the present specification, the data processing mapping table may store information about whether or not to block, reflect, and output the input data. In other words, the router 232 according to the present specification may determine whether to block the data without transmitting the data to another router, whether to reflect the input data, and whether to output the input data in accordance with the node ID on the basis of the data processing mapping table. In relation to the data processing mapping table, a default operation of outputting data input from one adjacent router to another adjacent router (data transmission) may be set in the router 232 according to the present specification, but a default operation of the router 232 is not limited thereto. Accordingly, the data processing mapping table may be information about a method of processing data input from other routers.

In the data processing mapping table, "blocking" means not transmitting data which is input through the second transmission input port ⑤ or the first transmission input port ③, through the first transmission output port ② or the second transmission output port ④. In the data processing mapping table, "reflecting" means outputting data which is input through the second transmission input port ⑤ through the second transmission output port ④. Alternatively, in the data processing mapping table, "reflecting" means processing data which is to be output through the first transmission output port ② like data input through the first transmission input port ③. In the data processing mapping table, "outputting" means outputting data input through the first transmission input port ③, through the main output port ⑥.

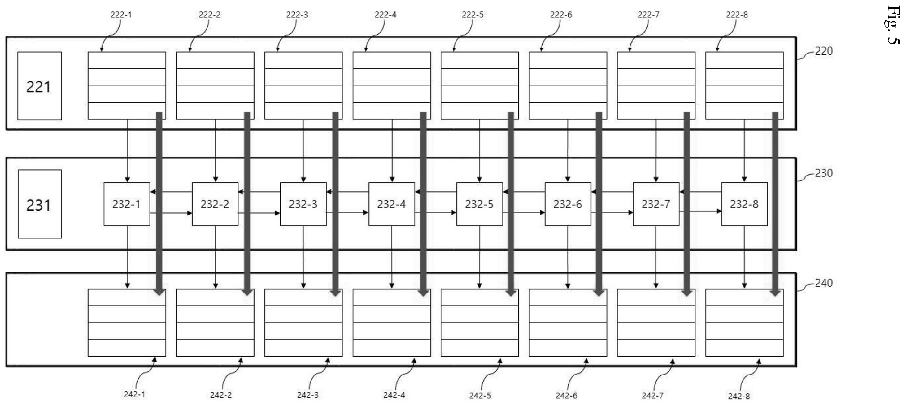

Therefore, a software topology configured by the plurality of routers 232 may be diversified depending on content recorded in the data processing mapping tables. The fetch network controller 231 may set whether or not to perform blocking, reflecting, and outputting in accordance with the topology to be reconfigured, and thus the software topology may be determined by the fetch network controller 231. The data processing mapping tables will be described in further detail below with reference to various embodiments of FIGS. 5 to 12.

FIG. 5 shows a software topology according to a first embodiment.

Referring to FIG. 5, the first embodiment is an example in which data fetched to each of the fetch buffers 222 is transmitted to one of the feed buffers 242. In other words, in the first embodiment, data stored in the first fetch buffer 222-1 is transmitted to the first feed buffer 242-1 only, and data stored in the second fetch buffer 222-2 is transmitted to the second feed buffer 242-2 only.

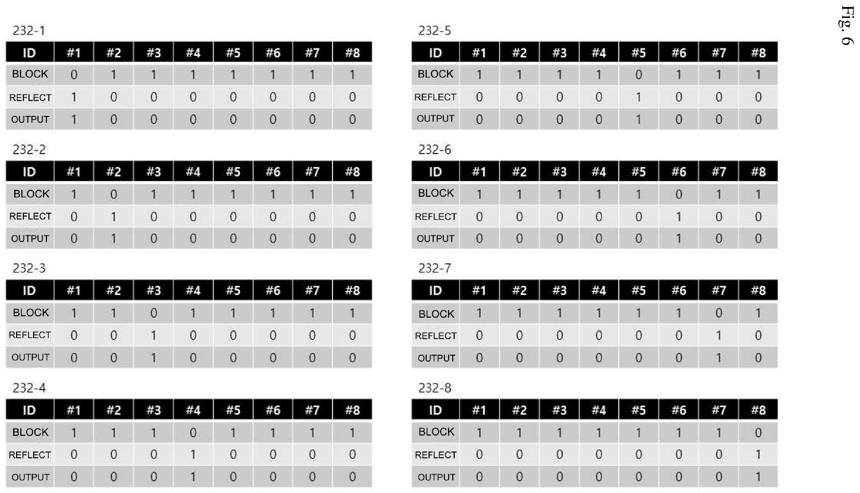

FIG. 6 is a reference diagram of a data processing mapping table according to the first embodiment.

Referring to FIG. 6, the data processing mapping table is divided by data processing method (e.g., blocking, reflecting, and outputting) in accordance with node IDs. In items of the data processing table, whether to perform a corresponding data processing method may be recorded. "1" represents that the corresponding item is performed, and "0" represents that the corresponding item is not performed.

Referring to the first router 232-1 of FIG. 5 in accordance with the data processing mapping table, ID #1 data is not blocked but is reflected and output. Since it is assumed in the present specification that the routers 232 transmit data counterclockwise, ID #1 data input through the main input port ① of the first router 232-1 is transmitted through the first transmission output port ②. At this time, since it is set in the data processing mapping table of the first router 232-1 that ID #1 data is reflected, ID #1 data to be output through the first transmission output port ② is processed like data input through the first transmission input port ③. Also, since it is set in the data processing mapping table of the first router 232-1 that ID #1 data is output, ID #1 data is output through the main output port ⑥. Other pieces of ID #2 to #8 data are blocked and neither reflected nor output. Accordingly, data fetched to the first fetch buffer 222-1 of FIG. 5 may be only output to the first feed buffer 242-1. Since the second router 232-2 to the eighth router 232-8 of FIG. 5 operate in the same way, overlapping description will not be unnecessarily repeated.

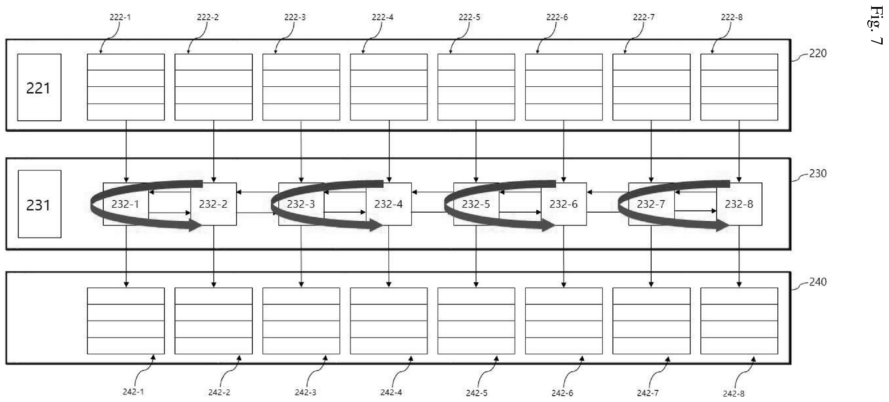

FIG. 7 shows a software topology according to a second embodiment.

Referring to FIG. 7, the second embodiment is an example in which data fetched to each of the fetch buffers 222 is transmitted to two of the feed buffers 242. In other words, in the second embodiment, data stored in the first fetch buffer 222-1 is transmitted to the first feed buffer 242-1 and the second feed buffer 242-2, and data stored in the second fetch buffer 222-2 is transmitted to the first feed buffer 242-1 and the second feed buffer 242-2.

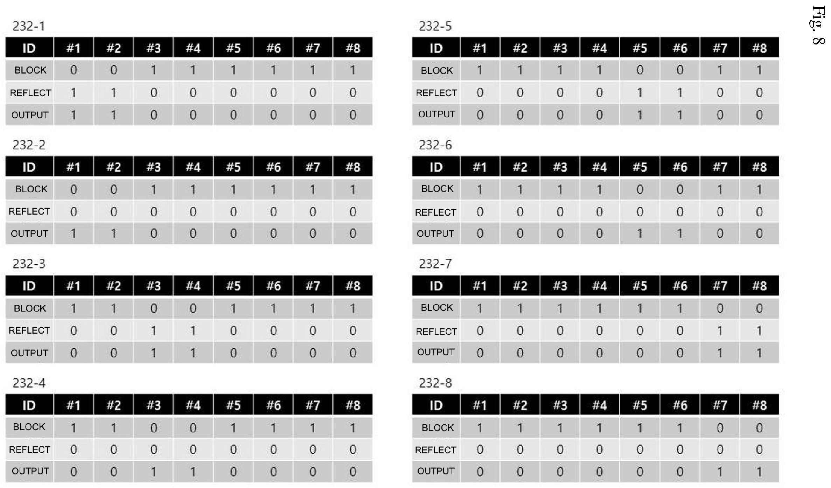

FIG. 8 is a reference diagram of a data processing mapping table according to the second embodiment.

Referring to the first router 232-1 of FIG. 7 in accordance with the data processing mapping table, ID #1 data is not blocked but is reflected and output. Since it was described in the first embodiment how the first router 232-1 outputs ID #1 data to the first feed buffer 242-1, overlapping description will be omitted. Since ID #1 data is processed like data input through the first transmission input port ③, ID #1 data may be transmitted to the second router 232-2 through the second transmission output port ④. Referring to the second router 232-2 of FIG. 7, ID #1 data is neither blocked nor reflected and is output. Accordingly, when ID #1 data is input from the first router 232-1, the second router 232-2 may output the ID #1 data to the second feed buffer 242-2. Consequently, data fetched to the first fetch buffer 222-1 can be output to the first feed buffer 242-1 and the second feed buffer 242-2.

Referring to the second router 232-2, ID #2 data is neither blocked nor reflected and is output. Since it is assumed in the present specification that the routers 232 transmit data counterclockwise, ID #2 data input through the main input port ① of the second router 232-2 may be transmitted to the first router 232-1 through the first transmission output port ②. Also, referring to the first router 232-1 of FIG. 7, ID #2 data is not blocked and is reflected and output. ID #2 data input to the first router 232-1 may be output to the first feed buffer 242-1 by the first router 232-1 like ID #1 data. Further, ID #2 data may be transmitted to the feed buffer 242-2 again. The second router 232-2 may output ID #2 data which is input again from the first router 232-1 through the first transmission input port ③, through the main output port ⑥. Accordingly, data fetched to the second fetch buffer 222-2 of FIG. 7 may be output to the first feed buffer 242-1 and the second feed buffer 242-2.

Meanwhile, in FIG. 7, ID #1 data is input through the first transmission input port ③ of the second router 232-2 and thus is output through the second transmission input port ④ of the second router 232-2. Accordingly, ID #1 data is not input back to the first router 232-1. In addition, the third router 232-3 blocks ID #1 data input through the first transmission input port ③ thereof. Also, the router 232-3 blocks ID #2 data input through the first transmission input port ③ thereof.

The first router 232-1 and the second router 232-2 of FIG. 7 block and neither reflect nor output other pieces of ID #3 to #8 data.

Since the third router 232-3, the fourth router 232-4, the fifth router 232-5, the sixth router 232-6, the seventh router 232-7, and the eighth router 232-8 of FIG. 7 operate in the same way, overlapping description will not be unnecessarily repeated.

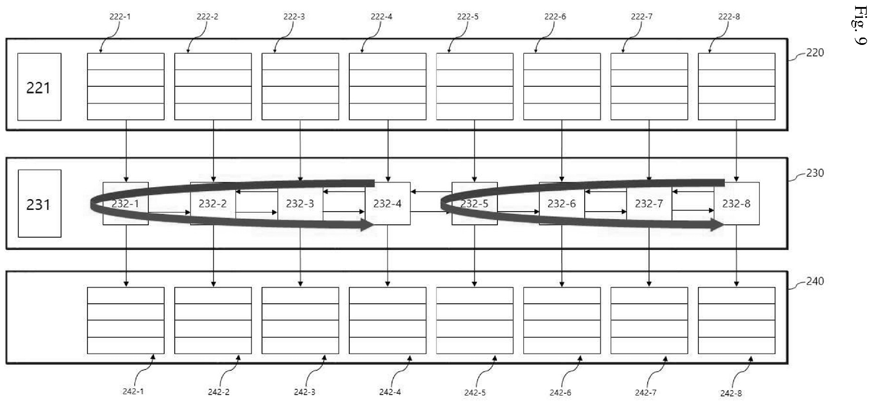

FIG. 9 shows a software topology according to a third embodiment.

Referring to FIG. 9, the third embodiment is an example in which data fetched to each of the fetch buffers 222 is transmitted to four of the feed buffers 242. In other words, in the third embodiment, data stored in the first to fourth fetch buffers 222-1 to 222-4 is transmitted to the first to fourth feed buffers 242-1 to 242-4.

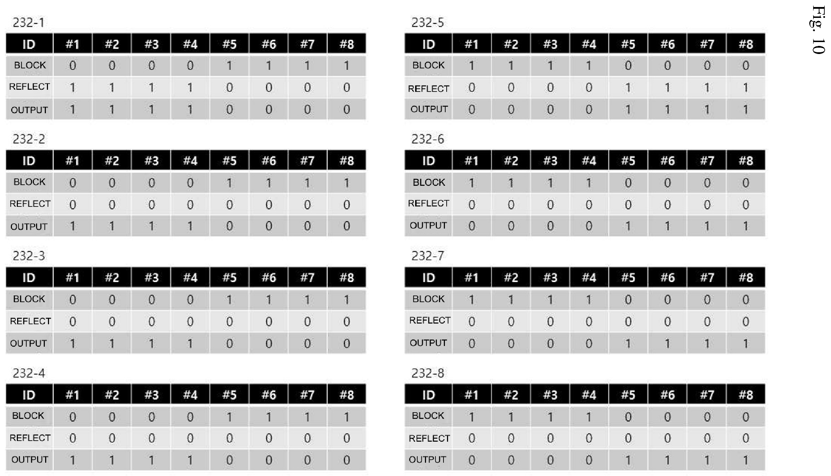

FIG. 10 is a reference diagram of a data processing mapping table according to the third embodiment.

Since processing of ID #1 data and ID #2 data has been described above through the first and second embodiments, processing of ID #3 data fetched to the third fetch buffer 222-3 of FIG. 9 will be representatively described in FIG. 10. First, ID #3 data fetched to the third fetch buffer 222-3 is input through the main input port ① of the third router 232-3 and output to the first transmission output port ② of the third router 232-3.

The second router 232-2 receives ID #3 data through the second transmission input port ⑤ and outputs ID #3 data to the first transmission output port ② thereof.

The first router 232-1 receives ID #3 data through the second transmission input port ⑤. According to the data processing mapping table of the first router 232-1, the first router 232-1 reflects and outputs ID #3 data. Accordingly, ID #3 data is output to the first feed buffer 242-1 through the main output port ⑥ and output to the second transmission output port ④ of the first router 232-1.

The second router 232-2 receives ID #3 data through the first transmission input port ③. According to the data processing mapping table of the second router 232-2, the second router 232-2 outputs ID #3 data. Accordingly, ID #3 data is output to the second feed buffer 242-2 through the main output port ⑥ and output to the second transmission output port ④ of the second router 232-2.

The third router 232-3 receives ID #3 data through the first transmission input port ③. According to the data processing mapping table of the third router 232-3, the third router 232-3 outputs ID #3 data. Accordingly, ID #3 data is output to the third feed buffer 242-3 through the main output port ⑥ and output to the second transmission output port ④ of the third router 232-3.

The fourth router 232-4 receives ID #3 data through the first transmission input port ③. According to the data processing mapping table of the fourth router 232-4, the fourth router 232-4 outputs ID #3 data. Accordingly, ID #3 data is output to the fourth feed buffer 242-4 through the main output port ⑥ and output to the second transmission output port ④ of the fourth router 232-4.

The fifth router 232-5 receives ID #3 data through the first transmission input port ③. According to the data processing mapping table of the fifth router 232-5, the fifth router 232-5 blocks ID #3 data, and thus ID #3 data is no longer output or transmitted.

Therefore, ID #3 data fetched to the third fetch buffer 222-3 of FIG. 9 may be transmitted to the first to fourth feed buffers 242-1 to 242-4. Likewise, ID #1 data, ID #2 data, and ID #4 data may also be transmitted to first to fourth feed buffers 242-1 to 242-4. Meanwhile, ID #5 data to ID #8 data may be transmitted to the fifth to eighth feed buffers 242-5 to 242-8 in the same way.

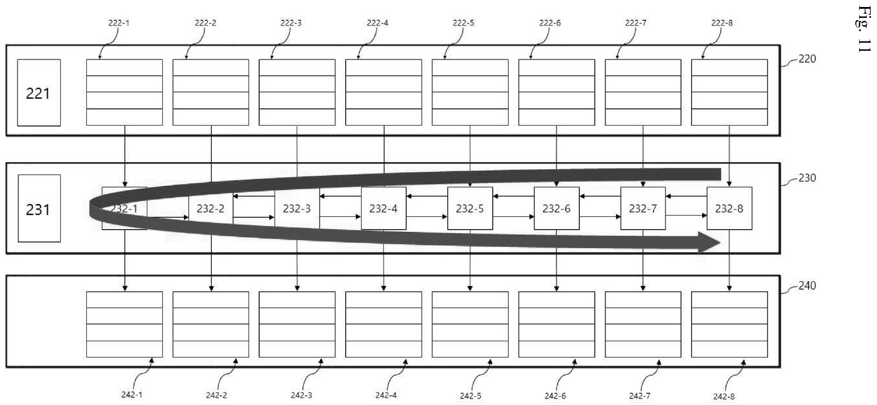

FIG. 11 shows a software topology according to a fourth embodiment.

Referring to FIG. 11, the fourth embodiment is an example in which data fetched to each of the fetch buffers 222 is transmitted to all the feed buffers 242. In other words, in the fourth embodiment, data stored in the first to eighth fetch buffers 222-1 to 222-8 is transmitted to each of the first to eighth feed buffers 242-1 to 242-8.

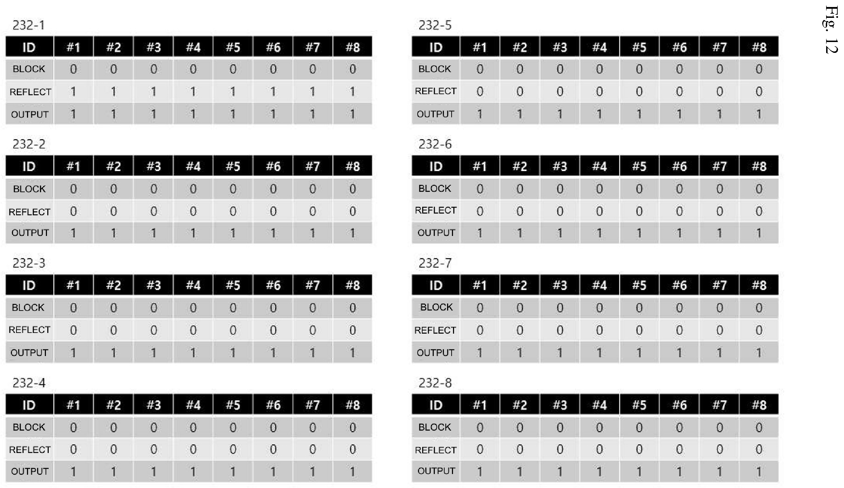

FIG. 12 is a reference diagram of a data processing mapping table according to the fourth embodiment.

Since it has been described above through the first to third embodiments how each of the routers 232 processes input data in accordance with the data processing mapping table, overlapping description will be omitted.

Also, as shown in FIGS. 5 to 12, the fetch network controller 231 may equally set blocking and outputting in the data processing mapping tables of routers 232 belonging to the same group in a reconfigured software topology.

Meanwhile, it has been described above how the routers 232 process one piece of data. However, it is necessary to process multiple pieces of data fetched to the multiple fetch buffers 222 together. The conventional art is a method of providing a sufficiently large buffer in routers to solve a problem when a collision occurs. However, it is obvious that a sufficiently large buffer may cause various problems such as an increase in a size of a processor, an increase in power consumption, an increase in heat generation, and a processing delay. It is known to anyone that providing a buffer having an appropriate size is best, but when a buffer included in any one router is full, there arises a problem in that data input/output of all connected routers should be delayed. In addition, when a delay between routers is variable (e.g., when clock domains are different), a more complex problem may occur. Therefore, there is a need for a method capable of appropriately controlling timing of inputting the fetched data to each router 232. The operation processing apparatus 10 according to the present specification may present a method of processing a plurality of data more effectively.

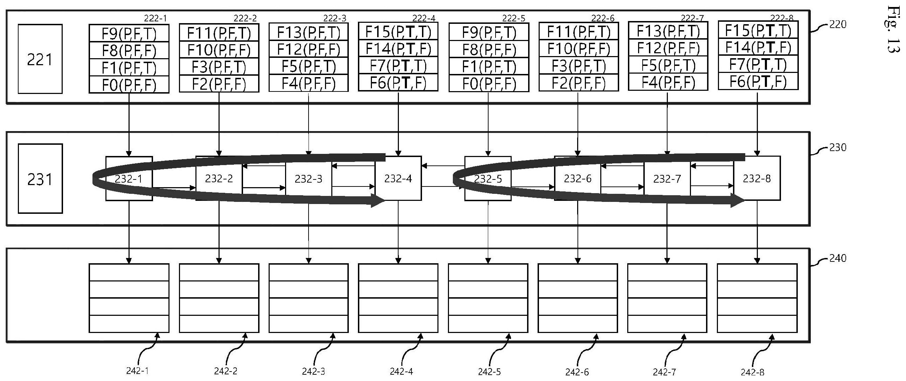

FIG. 13 is an example diagram of data input and output controlling according to an embodiment of the present specification.

Referring to FIG. 13, a software topology of the plurality of routers 232 is the same as that of the third embodiment shown in FIG. 9. Accordingly, when data fetched to the first to fourth fetch buffers 222-1 to 222-4 is input to the first to fourth routers 232-1 to 232-4, the data is to be output to the first to fourth feed buffers 242-1 to 242-4 without any collision. Meanwhile, control of data input and output will be described through the third embodiment in the present specification, but the operation processing apparatus 10 according to the present specification is not limited to this example.

In the example illustrated in FIG. 13, a case in which one data packet is composed of two flits will be described as an example. In the example illustrated in FIG. 13, numbers written in the flits indicate an input order to the feed buffer 242.

In the present specification, data input from the memory 100 to the router 232 may include tail information and keep-tail information. For example, the data fetched to the fetch buffer 222, that is, a flit, may have a format of a header, a payload, keep-tail information (keep_tail), and tail information (tail). The flit illustrated in FIG. 13 has a format in which 'payload (P)' is followed by 'keep-tail information (keep_tail)' and 'tail information (tail)'.

The tail information (tail) may be one of a first logical value (T) indicating an end of a packet and a second logical value (F) indicating that it is not the end of the packet, and the keep-tail information (keep_tail) may be one of a first logical value (T) indicating maintaining the tail information and a second logical value (F) indicating changing the tail information.

According to one embodiment of the present specification, the interface controller 221 may further set the tail information and the keep-tail information in the fetched data. .

The interface controller 221 may set tail information of last data of the packet among the fetched data to a first logical value (T), and may set tail information of remaining data to a second logical value (F).

In addition, the interface controller 221 may set keep-tail information of data having a last node ID among a software topology configuration of the router configured by the fetch network controller 231 through the data processing mapping table to a first logical value (T) indicating maintaining the tail information, and may set keep-tail information of data having remaining node IDs to a second logical value (F) indicating changing the tail information.

According to another embodiment of the present specification, a separate component for setting the tail information and the keep-tail information in the fetched data may be included in the network interface 220.

Referring to FIG. 13 according to the above setting, it may be confirmed that, among the data fetched to each buffer 222, tail information of flits having an even-numbered order is 'F' and tail information of flits having an odd-numbered order is 'T'. In addition, it may be confirmed that only keep-tail information of the fourth buffer 222-4 and the eighth buffer 222-8 having a last node ID of the software topology is 'T'.

The router 232 according to the present specification may include an arbiter 233 configured to control an input port according to tail information of input data and change the tail information according to keep-tail information of the input data. An operation of the arbiter 233 will be described in more detail.

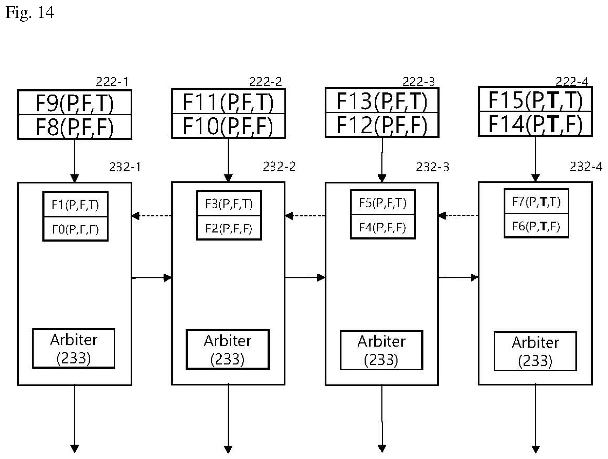

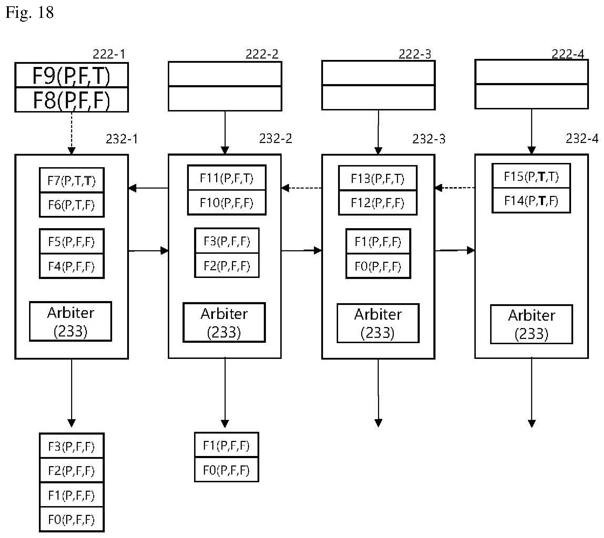

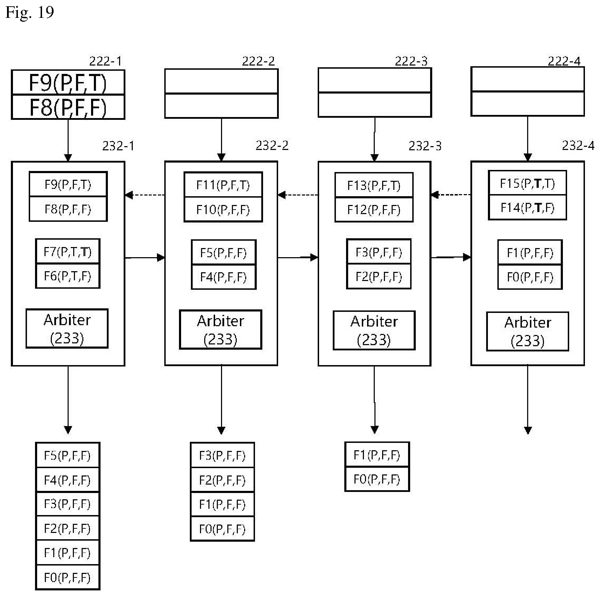

FIGs. 14 to 20 are reference diagrams illustrating that the arbiter unit processes data.

For simplification of the drawings, FIGs. 14 to 20 illustrate only the first to fourth patch buffers 222-1 to 222-4 and the first to fourth routers 232-1 to 232-4.

Referring to FIG. 14, first, the arbiter 233 may set an initial state such that, among ports related to input and output of the router 232, data is input from the memory 100, that is, from the main input port ①. Due to the initial state, the two flits fetched to each buffer 222 may be input to each router 232 in order.

When controlling an input port such that data is input from the memory 100, the arbiter 233 may change the input port such that data is input from an adjacent router when tail information of the data input from the memory 100, that is, from the fetch buffer 222, is a first logical value (T).

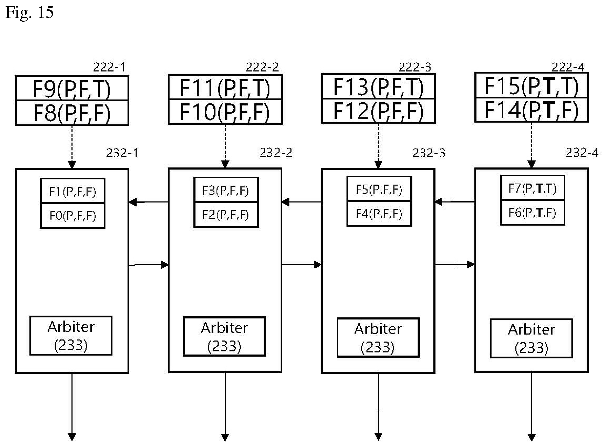

Referring to FIG. 15, since tail information of the second flit input to each router is 'T', it may be confirmed that the arbiter changes the input port of each router such that data is input from the second transfer input port ⑤ instead of the main input port ①.

Meanwhile, when keep-tail information of data input from the memory (the main input port) is a second logical value (F), the arbiter may change tail information of the input data to a second logical value (F). In the example illustrated in FIG. 13, since keep-tail information of flits F0 to F5 is all 'F', tail information of the flits F0 to F5, particularly, tail information of the flits F1, F3, and F5, will be changed to 'F'. In contrast, since keep-tail information of the flits F6 and F7 is all 'T', tail information of the flits F6 and F7 is not changed. In particular, it should be noted that tail information of the flit F6 is continuously maintained as 'F', but tail information of the flit F7 is maintained as 'T'.

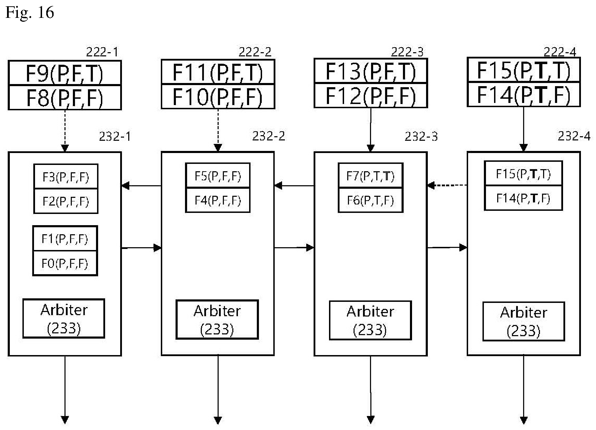

Data for which the tail information is maintained or changed may be output to an adjacent router. The arbiter 233 may control such that data is input from the memory when tail information of the data input from the adjacent router is a first logical value (T). Referring to FIG. 16, it may be confirmed that data is transmitted to the adjacent router. In particular, the third router 232-3 will be described. The third router 232-3 receives the flits F6 and F7 through the second transfer input port ⑤. Among them, since tail information of the flit F7 is 'T', the input port may be controlled such that data is input from the main input port ①.

Meanwhile, when it is set such that there is no data input from the adjacent router as in the fourth router 232-4, when tail information of data output to the adjacent router through the first transfer output port ② of the arbiter 233 is a first logical value (T), the arbiter 233 may control such that data is input from the main input port ①.

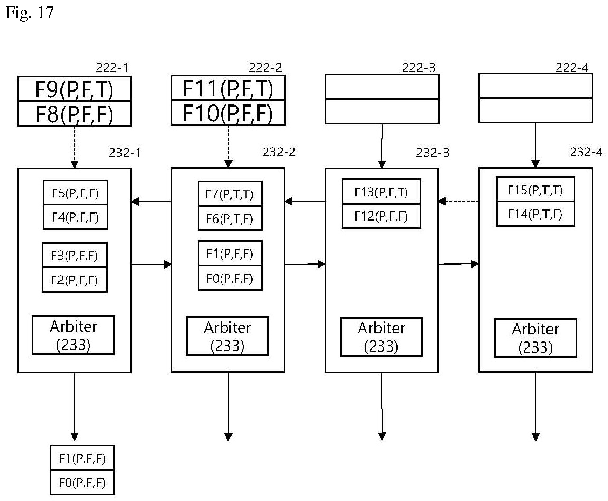

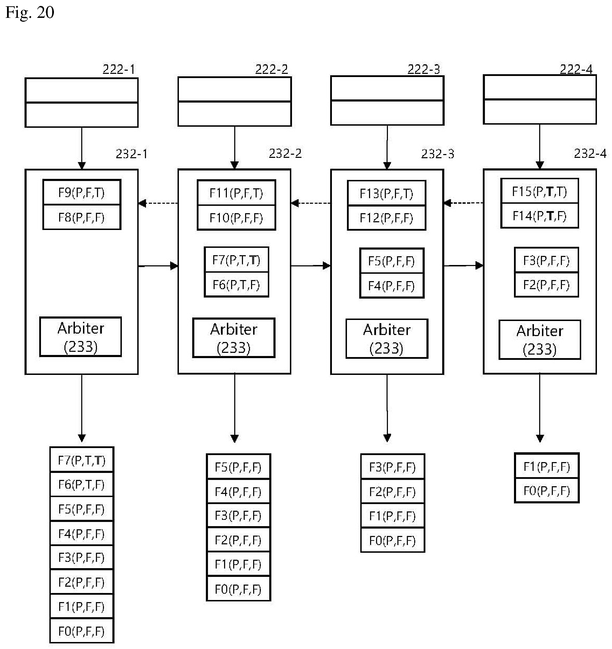

Referring to FIGs. 17 to 20 thereafter, it may be confirmed that data is transmitted sequentially. In particular, referring to the data output from the first router 232-1 in FIG. 20, it may be confirmed that the data is output in flit order. In addition, in FIG. 20, it may be confirmed that states of the flits 8 to 15 are considerably similar to the initial state mentioned in FIG. 14. Accordingly, it may be predicted that the flits 8 to 15 will also be transmitted sequentially.

As described with reference to FIGs. 3 to 12 of the present specification, the patch unit 200 according to the present specification can configure a software topology through the router's data processing mapping table and assign a node ID to the data fetched in the network interface, making it possible to output from a specific router. In addition, as described with reference to FIGs. 13 to 20 of the present specification, the patch unit 200 according to the present specification has a structure capable of ensuring sequential output of packet data. Therefore, through these two functions, the patch unit 200 according to the present specification can perform a data transpose. In the present specification, since the data transpose is performed internally by the patch unit 200, this may be referred to as an "inter-transpose."

For the inter-transpose, the interface controller 221 according to the present specification can assign a destination node ID to the data fetched in each data memory slice. This will be described in more detail through an example.

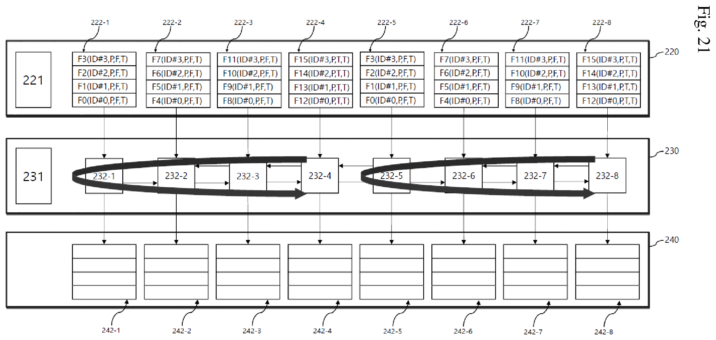

FIG. 21 is a reference diagram of an inter-transpose according to an embodiment of the present specification.

Referring to FIG. 21, it can be confirmed that the software topology of the plurality of routers 232 is the same as the third embodiment illustrated in FIG. 9 or FIG. 13. However, in the embodiment illustrated in FIG. 21, the node IDs and the "keep-tail information" and "tail information" of each data differ from those in the previous embodiments shown in FIGs. 9 and 13. In the example illustrated in FIG. 21, it is assumed that one flit corresponds to one packet, and all "tail information" is set to a first logic value (T) indicating the end of a packet. This is for convenience of description and does not limit the present specification.

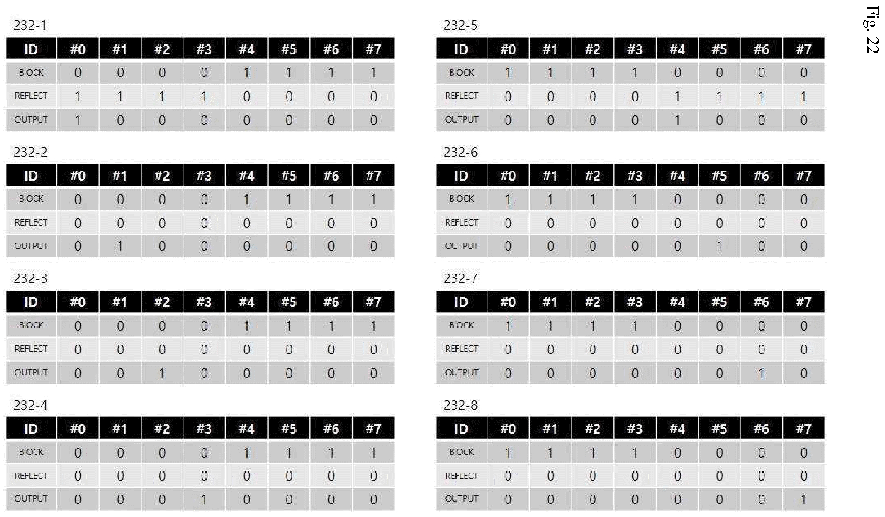

FIG. 22 is an example of a data processing mapping table for the inter-transpose according to an embodiment of the present specification.

Referring to FIG. 22, it is similar to the data processing mapping table illustrated in FIG. 10, but it can be confirmed that the "Output" field has differences. As previously described, the fetch network controller 231 can set whether to execute blocking and reflection according to the topology to be reconfigured. However, the fetch network controller can set blocking in the data processing mapping tables of routers belonging to the same group in the reconfigured topology identically and configure only one node ID to be output. This point will be explained in more detail later. Meanwhile, in the present specification, control of data input and output is described through the third embodiment, but the operation processing apparatus 10 according to the present specification is not limited to this example.

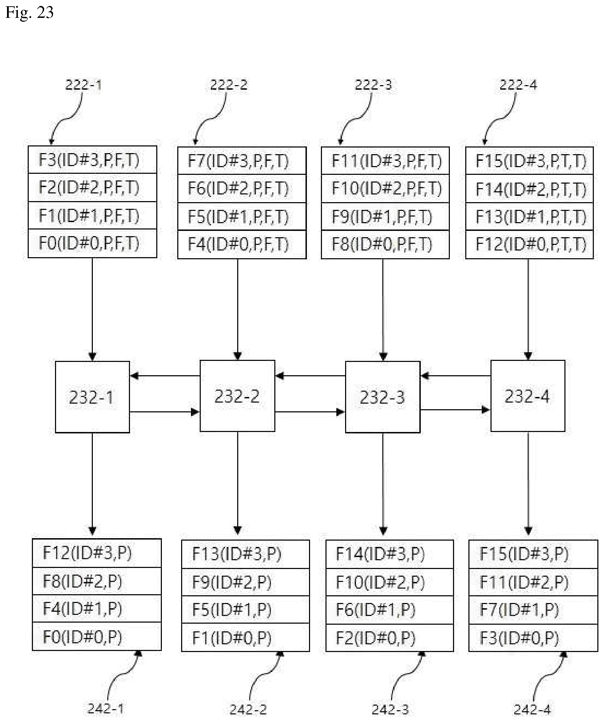

FIG. 23 is a reference diagram of the result of the inter-transpose according to an embodiment of the present specification.

Referring to FIG. 23, the network interface 220 can assign a number of destination node IDs, corresponding to the number of routers 232 belonging to the same group by the fetch network controller 231, to the data fetched in each data memory slice 101. In the example illustrated in FIG. 23, four routers 232-1, 232-2, 232-3 and 232-4 form one group, so the number of IDs is four (ID#0, ID#1, ID#2, ID#3). The network interface 220 can sequentially and repeatedly assign the destination node IDs to the data fetched in each data memory slice 101 according to the order in which the data was fetched. For example, in the first fetch buffer 222-1, it can be confirmed that the destination node IDs "ID#0, ID#1, ID#2 and ID#3" are assigned in order according to the fetch order of the data F0, F1, F2 and F3. Although the drawing does not illustrate data fetched thereafter, IDs can be assigned repeatedly in the same manner.

Now, assuming that the first data has been input to each router 232, the first router 232-1 receives 'F0(ID#0, F, T)', the second router 232-2 receives 'F4(ID#0, F, T)', the third router 232-3 receives 'F8(ID#0, F, T)', and the fourth router 232-4 receives 'F12(ID#0, F, T)'. These data will be processed according to the previously described sequential delivery guarantee. At this time, according to the data processing mapping table, the first router 232-1 is configured to output data having 'ID#0' (see FIG. 22). Therefore, 'F0(ID#0, F, T), F4(ID#0, F, T), F8(ID#0, F, T), and F12(ID#0, F, T)' can all be output to the first router 232-1.

Next, assuming that the second data has been input to each router 232, the first router 232-1 receives 'F1(ID#1, F, T)', the second router 232-2 receives 'F5(ID#1, F, T)', the third router 232-3 receives 'F9(ID#1, F, T)', and the fourth router 232-4 receives 'F13(ID#1, F, T)'. These data will be processed according to the previously described sequential delivery guarantee. At this time, according to the data processing mapping table, the second router 232-2 is configured to output data having 'ID#1' (see FIG. 22). Therefore, 'F1(ID#1, F, T), F5(ID#1, F, T), F9(ID#1, F, T), and F13(ID#1, F, T)' can all be output to the second router 232-2.

Thirdly and fourthly, the input and output of the data proceed through the same process. Therefore, by comparing the output data with the input data, it can be confirmed that a transpose has occurred. When one of the two axes constituting the data is stored inside the data memory slice and the other is stored across the memory slices, as illustrated in FIGS. 21 to 23, the two axes can be transposed.

Although embodiments of the present specification have been described with reference to the accompanying drawings, those skilled in the technical field to which the present specification pertains should appreciate that the present invention can be implemented in other specific forms without changing the technical spirit or essential characteristics. Therefore, the above-described embodiments should be understood as illustrative and not restrictive in all aspects.

### [Description of Signs]

10: operation processing apparatus
100: memory
101: data memory slice
200: fetch unit
210: fetch sequencer
220: network interface
221: interface controller
222: fetch buffer
230: fetch network
231: fetch network controller
232: router
233: arbiter
240: feed module
242: feed buffer
250: operation sequencer module
300: operation unit
310: dot-product engine
400: commit unit
410: commit sequencer

## Claims

1. An operation processing apparatus including a plurality of fetch units for reading data required for operations to perform processing of a neural network from memory and providing the data to an operation unit, wherein each fetch unit comprises:
a network interface having a fetch buffer in which data stored in the memory is fetched;
a fetch network having a data processing mapping table describing how to process the input data according to the node ID of the data fetched in the network interface and a plurality of routers that guarantee sequential delivery; and
a fetch network controller configured to reconfigure the data processing mapping table of each of the plurality of routers to form a software topology according to an operation form,
wherein the memory comprises a number of data memory slices equal to the plurality of routers, and
wherein the network interface comprises an interface controller configured to assign a destination node ID to the data fetched in each data memory slice.

2. The operation processing apparatus of claim 1,
wherein the network interface is configured to assign, to the data fetched in each data memory slice, a number of destination node IDs corresponding to the number of routers belonging to the same group by the fetch network controller.

3. The operation processing apparatus of claim 2,
wherein the network interface is configured to sequentially and repeatedly assign destination node IDs to the data fetched in each data memory slice according to the order in which the data was fetched.

4. The operation processing apparatus of claim 1, wherein each of the routers includes a main input port to which data is input from the memory, a first transmission output port configured to transmit the data to an adjacent first router, a first transmission input port to which data received from the adjacent first router is input, a second transmission output port configured to transmit the data to an adjacent second router, a second transmission input port to which data received from the adjacent second router is input, and a main output port configured to provide the data to the operation unit.

5. The operation processing apparatus of claim 1, wherein the data processing mapping tables store information about whether or not to block, reflect, and output the input data.

6. The operation processing apparatus of claim 3, wherein the fetch network controller sets whether or not to block, reflect, and output the input data in accordance with a topology to be reconfigured.

7. The operation processing apparatus of claim 4, wherein the fetch network controller equally sets blocking and outputting in the data processing mapping tables of the routers belonging to the same group in the reconfigured topology and sets only one node ID to be output.

8. The operation processing apparatus of claim 1,
wherein each router comprises an arbiter configured to control an input port according to tail information of the input data and change the tail information according to keep-tail information of the input data.

9. The operation processing apparatus of claim 1,
wherein the tail information is one of a first logical value (T) indicating an end of a packet and a second logical value (F) indicating that it is not the end of the packet, and
the keep-tail information is one of a first logical value (T) indicating maintaining the tail information and a second logical value (F) indicating changing the tail information.

10. The operation processing apparatus according to claim 9,
wherein, when controlling the input port such that data is input from the memory, the arbiter changes the input port such that data is input from an adjacent router when tail information of the data input from the memory is a first logical value (T).

11. The operation processing apparatus according to claim 9,
wherein the arbiter changes tail information of the input data to a second logical value (F) when keep-tail information of the data input from the memory is a second logical value (F).

12. The operation processing apparatus according to claim 9,
wherein the arbiter controls such that data is input from the memory when tail information of the data input from the adjacent router is a first logical value (T).

13. The operation processing apparatus according to claim 1,
wherein the interface controller further sets the tail information and the keep-tail information in the fetched data.

14. The operation processing apparatus according to claim 13,
wherein the interface controller sets tail information of last data of the packet among the fetched data to a first logical value (T), and sets tail information of remaining data to a second logical value (F).

15. The operation processing apparatus according to claim 13,
wherein the interface controller sets keep-tail information of data having a last node ID among a software topology configuration of the router to a first logical value (T) indicating maintaining the tail information, and sets keep-tail information of data having remaining node IDs to a second logical value (F) indicating changing the tail information.
